(19) Europäisches Patentamt

European Patent Office

Office européen des brevets

(11) **EP 1 149 338 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(21) Anmeldenummer: **00901107.3**

(22) Anmeldetag: **17.01.2000**

(51) Int Cl.[7]: **G06F 9/46**

(86) Internationale Anmeldenummer:
**PCT/EP00/00317**

(87) Internationale Veröffentlichungsnummer:
**WO 00/043874 (27.07.2000 Gazette 2000/30)**

(54) **LASTVERTEILUNGSVERFAHREN EINES MULTIPROZESSORSYSTEMS UND MULTIPROZESSORSYSTEM**

LOAD DISTRIBUTION METHOD FOR A MULTIPROCESSOR SYSTEM AND CORRESPONDING MULTIPROCESSOR SYSTEM

PROCEDE DE REPARTITION DE CHARGE D'UN SYSTEME MULTIPROCESSEUR ET SYSTEME MULTIPROCESSEUR

(84) Benannte Vertragsstaaten:
**DE FR GB IT**

(30) Priorität: **21.01.1999 EP 99101122**

(43) Veröffentlichungstag der Anmeldung:
**31.10.2001 Patentblatt 2001/44**

(73) Patentinhaber: **SIEMENS AKTIENGESELLSCHAFT**
**80333 München (DE)**

(72) Erfinder:
• **ROSS, Christopher**
  **D-81675 München (DE)**
• **HANSELKA, Peter**
  **D-81379 München (DE)**
• **RAICHLE, Gabriele**
  **D-81476 München (DE)**

(56) Entgegenhaltungen:
**EP-A- 0 715 257**

• **EVANS D J ET AL: "DYNAMIC LOAD BALANCING USING TASK-TRANSFER PROBABILITIES" PARALLEL COMPUTING, Bd. 19, Nr. 8, 1. August 1993 (1993-08-01), Seiten 897-916, XP000385007**

**Beschreibung**

Die Erfindung betrifft ein Verfahren zur Lastverteilung in einem Multiprozessorsystem, insbesondere in einem Multiprozessorsystem eines Kommunikationssystems, bei dem anfallende Aufgaben von mehreren Prozessoren $MP_i$ (mit i=1,2,....,n) unter Realzeitbedingungen abgearbeitet werden können und ein Multiprozessorsystem, insbesondere eines Kommunikationssystems, mit einem Lastverteilungsmechanismus.

Ein ähnliches Verfahren zur Lastverteilung in einem Multiprozessorsystem, insbesondere in einem Multiprozessorsystem eines Kommunikationssystems, ist beispielsweise aus der Europäischen Patentanmeldung EP 0 645 702 A1 der Anmelderin bekannt. Diese Schrift offenbart ein Verfahren zum Lastenausgleich in einem Multiprozessorsystem, insbesondere ein Multiprozessorsystem eines Kommunikationssystems, bei dem anfallende Aufgaben von mehreren Prozessoren unter Realzeitbedingungen abgearbeitet werden können, wobei zur Durchführung des Lastausgleiches allgemein die folgenden Verfahrensschritte genannt sind:

- jeder Prozessor ermittelt seinen Lastzustand in Form einer quantifizierten Größe,
- jedem Prozessor werden die astzustände der anderen Prozessoren innerhalb eines Zeitrasters mitgeteilt,
- jeder Prozessor gibt in Abhängigkeit vom Überschreiten einer bestimmten Größe seines Lastzustandes und in Abhängigkeit von den Lastzuständen der übrigen Prozessoren zumindest einen Teil der bei ihm anfallenden Aufgaben an die übrigen Prozessoren ab, und
- die abgegebenen Aufgaben werden entsprechend den Lastzuständen der übrigen Prozessoren auf diese aufgeteilt.

Im Ausführungsbeispiel wird das Verfahren dahingehend konkretisiert, daß im Betrieb ständig und vor dem Einstieg in die Lastverteilung, die hier erst ab dem Erreichen einer bestimmten Überlast beginnt, Verteilungsquoten errechnet werden, nach denen die einzelnen Prozessoren im Fall der Überlast an andere Prozessoren ihre verteilbare Last abgeben. Ist das System dauerhaft ung eichmäßig ausgelastet, so wird die Last erst bei Überlast eines oder mehrerer Prozessoren verteilt. Damit geht aber unnötige Lastabwehr einher. Die Reduktion der Überlastschwelle auf einen niedrigeren Wert führt zu keinem befriedigenden Ergebnis, weil dann unnötig viel Last verteilt wird und es zu Schwingungszuständen kommen kann. Diese Situation ergibt sich aus der dort getroffenen Annahme, daß die Überlast oder die ungleichmäßige Belastung von kurzer Dauer ist.

Des weiteren wird auf Evans D. J. et al, "Dynamic Load Balancing using Tasktransfer Probabilities" in Parallel Computing, Bd. 19, Nr. 8, 1. August 1993, Seiten 897-916, hingewiesen, in der auch eine Lastverteilungsstrategie unter Berücksichtigung von Lastverteilungswahrscheinlichkeiten dargestellt wird, wobei jedoh ausschließlich aktuell gemessene Werte Berücksichtigung finden. Die zeitliche Entwicklung der betrachteten Parameter findet keine Beachtung.

Es ist daher Aufgabe der Erfindung, ein verbessertes Lastverteilungsverfahren für ein Multiprozessorsystem anzugeben, welches rechtzeitig und "weich" einsetzt und dadurch dauerhafte Schieflastzustände im Lastangebot ohne Lastabwehr bewältigt. Außerdem soll auch ein entsprechendes Multiprozessorsystem angegeben werden.

Die Aufgabe wird einerseits durch ein Verfahren mit den Verfahrensschritten des ersten Verfahrensanspruches und andererseits durch ein Multiprozessorsystem mit den Merkmalen des ersten Vorrichtungsanspruches gelöst.

Demgemäß schlagen die Erfinder ein Verfahren zur Lastverteilung in einem Multiprozessorsystem, insbesondere in einem Multiprozessorsystem eines Kommunikationssystems, bei dem anfallende Aufgaben von mehreren Prozessoren $MP_i$ (mit i=1,2,....,n) unter Realzeitbedingungen abgearbeitet werden können, mit folgenden iterativen und sich in Zeitintervallen CI wiederholenden Verfahrensschritten vor:

- jeder Prozessor $MP_i$ ermittelt seinen tatsächlichen Lastzustand $Y_i$ und schätzt in Abhängigkeit von seiner zuvor bestimmten Verteilungsquote $q_i$(alt) (mit $q_i$=an andere Prozessoren $MP_k$ nach Möglichkeit zu verteilender Lastanteil) und dem typischerweise verteilbaren Anteil V einer typischen Aufgabe seine angebotene Last $A_i$, die zu einem mehrwertigen Lastindikationswert (Balancing Indicator) $MPbi_i$ führt,
- jeder Prozessor $MP_i$ teilt seinen Lastindikationswert $MPbi_i$ den jeweils anderen Prozessoren $MP_k$ (mit k=1,2,...i-1,i+1,...n) mittelbar oder unmittelbar mit,
- jeder Prozessor $MP_i$ bestimmt seine Lastverteilungsfaktoren $p_{ij}$ (mit j=1,2,....n) in Abhängigkeit von den Lastindikationswerten $MPbi_k$ dieser anderen Prozessoren $MP_k$,
- jeder Prozessor $MP_i$ bestimmt seine Verteilungsquote $q_i$(neu) in Abhängigkeit von seinem tatsächlichen Lastzustand $Y_i$ und den Lastverteilungsfaktoren $p_{ij}$
- jeder Prozessor $MP_i$ verteilt anhand seiner Quote $q_i$ und seiner Lastverteilungsfa ktoren $p_{ij}$ seine verteilbare Last an andere Prozessoren $MP_k$, wenn seine Verteilungsquote $q_i$(neu) einen vorgegebenen Wert $q_v$ überschreitet.

Zur Abschätzung der angebotenen Last $A_i$ eines Prozessors $MP_i$ ist es vorteilhaft, die Formel $A_i:=Y_i/(1-q_iV)$ zu verwenden. $A_i$ und $Y_i$ können in der Einheit Erlang angegeben werden, während die Variablen $q_i$ und V entsprechend ihrer Bedeutung dimensionslose Bruchteilangaben sind.

Vorteilhaft ist auch eine Unterteilung des mehrwertigen Lastindikationswertes (balancing indicator) $MPbi_i$ in drei diskrete Werte, wobei vorzugsweise die folgende Abgrenzung mit Schwellenwerten gilt: NORMAL für $MPbi_i$, wenn die Prozessorauslastung 0 bis 70% beträgt, HIGH für $MPbi_i$, wenn die Prozessorauslastung 70% bis 85% beträgt, und OVERLOAD für $MPbi_i$, wenn die Prozessorauslastung über 85% beträgt.

Vorteilhaft ist es auch, wenn eine Hysterese bei Lastzustandswechsel aufgrund von Schwellenwertüberschreitung oder Schwellenwertunterschreitung bei steigender oder fallender Prozessorauslastung eingeführt wird.

Außerdem kann es vorteilhaft sein, wenn der Lastindikationswert (balancing indicator) $MPbi_i$ bezüglich Änderungen einer zeitlichen Hysterese unterliegt und damit eine gewisse Trägheit erfährt. Als Hysteresegrenze können vorteilhaft Werte von 1 bis 2 Zeitintervallen CI angenommen werden.

Weitere vorteilhafte Annahmen bei der Durchführung des erfindungsgemäßen Verfahrens sind: der typische verteilbare Anteil V einer typischen Aufgabe soll der durchschnittliche oder maximale Anteil sein und als typische Bearbeitungszeit einer Aufgabe soll eine durchschnittliche oder maximale Bearbeitungszeit einer Aufgabe angenommen werden. Vorteilhaft kann hierbei der jeweilige Durchschnittswert oder Maximalwert eines Anteils beziehungsweise einer Aufgabe auch während der Betriebszeit ständig ermittelt und gegebenenfalls als gleitender Wert mitgeführt und aktualisiert in das Lastverteilungsverfahren übernommen werden. Günstig ist es hierbei, wenn die Zeitdauer, über die die gleitenden Werte ermittelt werden, groß gegenüber dem Kontrollintervall CI ist.

Besonders vorteilhaft ist es auch, wenn für den vorgegebenen Wert $q_v$ der Verteilungsquote $q_i$, ab dem der Prozessor MPi verteilbare Last an andere Prozessoren $MP_k$ verteilt, gilt: $0,05<q_v<0,3$, vorzugsweise $0,1<q_v<0,25$, vorzugsweise $q_v=0,2$.

Weiterhin kann das erfindungsgemäße Verfahren besonders vorteilhaft ausgestaltet werden, wenn bei der Berechnung der Verteilungsquote $q_i$ die folgenden Kriterien erfüllt werden:

- $p_{ii} := 0$
- falls $MPbi_j$ einer mittlere Last entspricht, vorzugsweise $NPbi_j$=NORMAL, gilt: $p_{ij}(neu) = p_{ij}(alt)+p_{c1}/n$, für j=1,...,n und i≠j
- falls $MPbi_j$ einer hohen Last entspricht, vorzugsweise $MPbi_j$=HIGH gilt: $p_{ij}(neu) = p_{ij}(alt)-p_{c2}/n$, für j=1,...,n und i≠j
- falls $MPbi_j$ einer Überlast entspricht, vorzugsweise $MPbi_j$=OVERLOAD, gilt: $p_{ij}(neu) = 0$
- wobei die $p_{ij}$ (j=1,..,n) mit der Summe $p_{sum}$ der $p_{ij}$ auf 1 normiert wird und
- als Initialisierungswert beim Beginn der Verteilungsprozesse alle $p_{ij}$, ausgenommen $p_{ii}$, gleich sind.

Als vorteilhafte Zahlenwerte können für die Konstante $p_{c1}$ $0,1<p_{c1}<0,5$, vorzugsweise $0,2<p_{c1}<0,3$ und vorzugsweise $p_{c1}=0,25$ angenommen werden. Ebenso ist es vorteilhaft für die Konstante $p_{c2}$ $0,1<p_{c2}<0,5$, vorzugsweise $0,2<p_{c2}<0,3$, vorzugsweise $p_{c2}=0,25$ zu setzen. Auch kann der Initialisierungswert der $p_{ij}$ beim Beginn der Verteilungsprozesse gleich $(n-1)^{-1}$ gesetzt werden.

Weiterhin kann das erfindung gemäße Verfahren besonders vorteilhaft ausgestaltet werden, wenn jeder Prozessor $MP_i$ anhand seiner tatsächlichen aktuellen Last $Y_i$ einen mehrwertigen Laststatus (load state) $MPls_i$ bestimmt und bei der Berechnung der Lastindikationswerte $MPbi_i$ die folgenden Kriterien erfüllt werden:

- falls $MPls_i$ der höchsten Last entspricht, vorzugsweise $MPIS_i$=EXTREME, gilt: $q_i(neu)=c_{q1}$,
- falls $p_{sum} \geq 1$ gilt:

- falls der tatsächliche Lastzustand $Y_i$ größer als ein vorgegebener Wert $threshold_H$ ist, wird $q_i$ vergrößert mit $q_i=min(q_i+C_{q1},1)$,
- falls der tatsächliche Listzustand $Y_i$ kleiner als ein vorgegebene Wert $threshold_N$ ist, wird $q_i$ verkleinert mit $q_i=max\{q_i-c_{q2}, c_{q3}\}$, mit $0<c_{q3}<q_v$, vorzugsweise $c_{q3}=0,1$,
- andernfalls ($threshold_N \leq Y_i \leq threshold_H$) erhält qi einen Zwischenwert zwischen den beiden oben genannten Alternativen, vorzugsweise durch lineare Interpolation
- falls $p_{sum} \leq 1$ gilt: $qi(neu)=qi(alt) * p_{sum}$.

Bezüglich des mehrwertigen Laststatus (load state) $MPls_i$ wird als besonders bevorzugt die Annahme von vier diskreten Werten vorgeschlagen, wobei vorzugsweise angenommen wird: NORMAL für $MPls_i$, wenn die Prozessorauslastung unter 70% liegt, HIGH für $MPls_i$, wenn die Prozessorauslastung 70% bis 85%, OVERLOAD für $MPls_i$, wenn die Prozessorauslastung über 85% liegt und EXTREME für $MPls_i$, wenn dauerhaft der Lastzustand OVERLOAD vorherrscht. Auch hier kann es vorteilhaft sein, wenn der Laststatus (load state) $MPls_i$ bezüglich Änderungen einer Hysterese unterliegt.

Zur optimalen Ausgestaltung des Verfahrens sind für die Konstante $c_{q1}$ die folgenden Zahlenbereiche und -werte bevorzugt: $0,05<c_{q1}<0,3$, vorzugsweise $0,1<c_{q1}<0,2$, vorzugsweise $c_{q1}=0,15$. Außerdem kann für die Konstante $c_{q2}$ vorzugsweise $0,05< c_{q2}<0,2$, vorzugsweise $c_{q2}=0,10$ angenommen werden.

Bezüglich der Konstanten $threshold_N$ gilt als bevorzugter Wertebereich: $0,6< threshold_N <0,8$, vorzugsweise $threshold_N =0,7$.

Bezüglich der Konstanten $threshold_H$ gilt als bevorzugter Wertebereich: $0,7< threshold_H <0,95$, vorzugsweise $threshold_H =0,85$.

Eine andere Ausgestaltung des erfindungsgemäßen Verfahrens sieht vor, daß zusätzlich in jedem Zeitintervall CI ein Überlastwert $OL_i$ der Prozessoren

$MP_i$ ermittelt wird, der ein Maß für die Größe der Überlast ist und als Maßstab zur Überlastabwehr dient, mit $OL_i=0,1,...m$, wobei $OL_i$ eine Quantifizierung für die Überlast des Prozessors darstellt, und die Verteilungsquote $q_i$ auf jeden Fall vergrößert wird, falls $OL_i>0$ mit $q_i(neu) := min\{qi(alt)+c_{q1},1\}$.

Erfindungsgemäß besteht auch die Möglichkeit, eine Adaption des Lastverteilungsverfahrens an sich ändernde Randbedingungen durchzuführen, indem die oben angegebenen Konstanten ($q_v$, $p_{c1}$, $p_{c2}$, $q_{c1}$, $q_{c2}$, $threshold_N$, $threshold_N$, $c_{q1}$, $c_{q2}$, $c_{q3}$) im Betrieb zumindest teilweise angepaßt werden.

Erfindungsgemäß wird außerdem ein Multiprozessorsystem, insbesondere eines Kommunikationssystems, mit mehreren Prozessoren $MP_i$ (mit i=1,2,....,n) zur Ausführung anfallender Aufgaben unter Realzeitbedingungen, vorgeschlagen, wobei:

- jeder Prozessor $MP_i$ Mittel aufweist, um seinen tatsächlichen Lastzustand $Y_i$ zu bestimmen, und in Abhängigkeit von seiner zuvor bestimmten Verteilungsquote $q_i(alt)$ (mit $q_i$=an andere Prozessoren $MP_k$ nach Möglichkeit zu verteilender Lastanteil) und dem typischerweise verteilbaren Anteil V einer typischen Aufgabe seine angebotene Last $A_i$ zu schätzen, die zu einem mehrwertigen Lastindikationswert (Balancing Indicator) $MPbi_i$ führt,
- jeder Prozessor $MP_i$ Mittel aufweist, um seinen Lastindikationswert $MPbi_i$ den jeweils anderen Prozessoren $MP_k$ (mit k=1,2,...i-1,i+1,...n) mittelbar oder unmittelbar mitzuteilen,
- jeder Prozessor $MP_i$ Mittel aufweist, um seine Lastverteilungswahrscheinlichkeiten $p_{ij}$ (mit j=1,2,....n) in Abhängigkeit von den Lastindikationswerten $MPbi_k$ dieser anderen Prozessoren $MP_k$ zu bestimmen,
- jeder Prozessor $MP_i$ Mittel aufweist, um seine Verteilquote $q_i(neu)$ in Abhängigkeit von seinem tatsächlichen Lastzustand $Y_i$ zu bestimmen, und
- jeder Prozessor $MP_i$ Mittel aufweist, um anhand seiner Quote $q_i$ und seiner Lastverteilungsfaktoren $p_{ij}$ seine verteilbare Last an andere Prozessoren $MP_k$ zu verteilen, wenn seine Verteilquote $q_i(neu)$ einen vorgegebenen Wert $q_v$ überschreitet.

Erfindungsgemäß wird das oben vorgeschlagene Multiprozessorsystem so ausgestaltet, daß jeweils eines der oben genannten Verfahren implementiert ist, wobei die Implementierung durch eine entsprechende Programmierung der Prozessoren erfolgt.

Es ist noch darauf hinzuweisen, daß der Index (alt) sich jeweils auf die Werte des vorhergehenden Iterationsschrittes, beziehungsweise der Index (neu) sich auf den jetzt aktuellen Iterationsschritt beziehen.

Der besondere Vorteil des erfindungsgemäßen Verfahrens und des entsprechenden Multiprozessorsystems liegt darin, daß es im Gegensatz zum eingangs genannten Stand der Technik einen "weichen" Einstieg in die Lastverteilung gewährleistet und dadurch anpassungsfähiger, weniger anfällig gegen Schieflastsituationen ist und Schwingungszustände besser vermieden werden. Im Endeffekt wird hierdurch die Wahrscheinlichkeit für die Abwehr von Aufgaben, insbesondere Vermittlungsaufgaben reduziert.

Weitere Ausgestaltungen, zusätzliche Merkmale und Vorteile der Erfindung ergeben sich aus der nachfolgenden Beschreibung eines bevorzugten Ausführungsbeispiels unter Bezugnahme auf die Zeichnungen.

Die vorstehend genannten und nachstehend noch zu erläuternden Merkmale der Erfindung Sind in den, in den beigefügten Ansprüchen festgelegen Kombinationen verwendbar, ohne den Rahmen der Erfindung zu verlassen.

Die Figuren zeigen im einzelnen:

Figur 1: Flußbild des anfallenden und verteilten Lastangebotes

Figur 2a: Grafische Darstellung der Entscheidungen zur Aktualisierung der Lastverteilungsfaktoren $p_{ij}$

Figur 2b: Grafische Darstellung der Entscheidungen zur Aktualisierung der Verteilungsquoten $q_i$

Figur 3: Formel zur linearen Interpolation von $q_i$

Das erfindungsgemäße Verfahren (Normal Load Balancing=NLB) ist ein quotiertes Load Balancing Verfahren, das auf einem Multiprozessorsystem, insbesondere in einer Vermittlungsstelle eines Kommunikationssystems, zur Verteilung anfallender Arbeitslasten auf die jeweils anderen Prozessoren abläuft und sicherstellen soll, daß andauernde Schieflastsituationen bewältigt und möglichst alle angeforderten Aufgaben in möglichst kurzer Zeit abgearbeitet werden. Nachfolgend soll eine besonders vorteilhafte Ausführungsform dieses Verfahrens beschrieben werden.

Auf jedem Prozessor $MP_i$ mit i=1,2,...,n wird eine Verteilquote $q_i$ geführt, die den Anteil V der verteilbaren Last, der tatsächlich verteilt werden soll, festsetzt. Eine solche Quote ermöglicht einen weicheren Ein- beziehungsweise Ausstieg aus der Lastverteilung an andere Prozessoren. Auf diese Weise werden Schwingzustände und Lastschwankungen vermieden. Dies kann beispielsweise der Fall sein, wenn ein Prozessor so viel Last an einen anderen verteilt, daß dieser wiederum überlastet wird.

Die Verteilquote $q_i$ wird jedes Zeitintervall CI neu bestimmt. Die einzige Information, die jedes CI von den anderen Prozessoren $MP_k$ mit k=1,...i-1,i+1,...n benötigt wird, sind Lastwertindikatoren (Balancing Indikatoren) $MPbi_i$. Diese Lastwertindikatoren sind - ähnlich wie die Laststatuswerte (Load States) von der Load Control - Lastzustände mit den Wertigkeiten NORMAL, HIGH oder OVERLOAD. Während der Load State anhand der tatsächlich bearbeiteten Last $Y_i$ des Prozessors $MP_i$ bestimmt wird, wird der Lastwertindikatoren $MPbi_i$ aus einer Schätzung der aktuell angebotenen

Last $A_i$ ermittelt. Die geschätzte angebotene Last $A_i$ kann durch Lastverteilung erheblich mehr als die tatsächlich bearbeitete Last $Y_i$ sein und stellt die maßgebliche Größe dar, die (in Form des Lastwertindikators $MPbi_i$) ein Prozessor $MP_i$ den anderen $MP_k$ als Information zur Verfügung stellt.

Zusätzlich zur Verteilungsquote $q_i$ werden auf jedem $MP_i$ Wahrscheinlichkeiten $p_{ij}$ geführt, welche die Wahrscheinlichkeit angeben, daß bei Lastverteilung Last vom i-ten Prozessor $MP_i$ auf den j-ten Prozessor $MP_j$ übertragen wird. Die Wahrscheinlichkeiten werden so bestimmt, daß, wenn etwa der j-te Prozessor $MP_j$ schon viel Last zu bearbeiten hat und deshalb nur wenig zusätzliche Last aufnehmen kann, das zugehörige $p_{ij}$ kleiner ist als das $P_{ik}$ für einen freien $MP_k$.

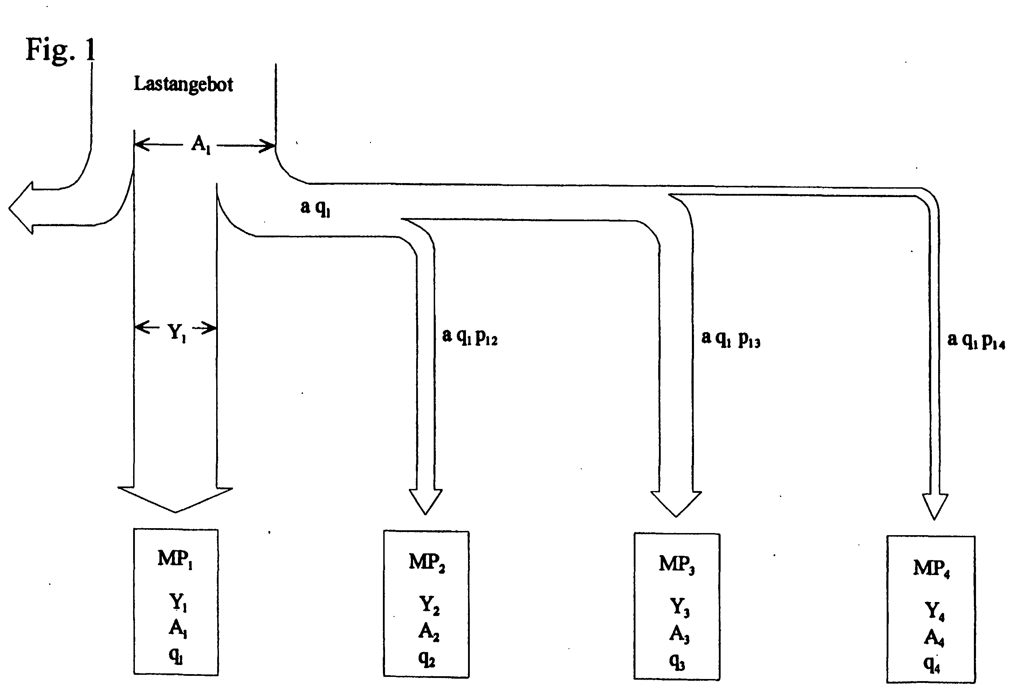

In Figur 1 wird das Zusammenspiel der $p_{ij}$ und $q_i$ veranschaulicht. Die doppelte Indizierung "ij" der Kenngrößen besagt, daß jeweils der Prozessor mit der Nummer des ersten Index (hier i) jeweils eine "Spalte" von n Werten mit dem zweiten Index (hier j) kennt. Es ist zu bemerken, daß jeder Prozessor nur seine relevanten Werte (also seine Spalte) kennt, wobei insgesamt im System eine quadratische Matrix bekannt ist So ist zum Beispiel $p_{ij}$ die Wahrscheinlichkeit, daß Last vom i-ten MP auf den j-ten MP verteilt wird, wenn der i-te MP zu viel Last hat.

In der Figur 1 ist außerdem die tatsächlich bearbeitete Last des j-ten Prozessors $MP_j$ mit $Y_j$, die geschätzte angebotene Last mit $A_j$ und der Teil des Lastangebotes, der verlagert werden kann, mit a bezeichnet. Die gezeigte Lastsituation ist Überlast (OVERLOAD) auf $MP_1$, auf den $MP_k$ mit k=2,3,4 ist noch Raum für zusätzliche Aufgaben. Es wird gezeigt, wie der $MP_1$ einen ersten Teil der Last selbst bearbeitet und den Rest a verteilt. Von diesem Rest a geht der größte Anteil an $MP_3$, der kleinste Anteil an $MP_4$, der in diesem Beispiel also schon viel eigene Last zu bearbeiten hat. Nicht eingezeichnet sind die Lasten, weiche die $MP_k$ außer von $NP_1$ noch erhalten. Die Breite der Fließbalken stellen ein Maß für die Größe der Last dar.

Gemäß dem Erfindungsgedanken ergibt sich also der folgende Algorithmus: Meldet der j-te Prozessor $MP_j$ den Balancing Indikator NORMAL, wird auf dem jeweils betrachteten $MP_i$ das $p_{ij}$ vergrößert. Es steigt also die Wahrscheinlichkeit, daß dieser Prozessor $MP_i$ Last an $MP_j$ abgibt, wenn er Last verteilen muß. Wird der Balancing Indikator HIGH gemeldet, so wird das $p_{ij}$ verkleinert. Wird der Balancing Indikator OVERLOAD gemeldet, wird $p_{ij}$ auf Null gesetzt, so daß keine Last an den j-ten Prozessor $MP_j$ abgegeben wird. Die Verteilungsquote $q_i$ wird anschließend an die Bestimmung der $p_{ij}$ verändert. Konnten viele der $p_{ij}$ vergrößert werden, so ist die Summe der $p_{ij}$ über j größer 1 und offenbar noch Platz auf den anderen Prozessoren $MP_k$. Die Verteilungsquote $q_i$ kann also nach den Erfordernissen des (betrachteten) Prozessors verändert werden.

Bei hoher Last $Y_i$ auf dem betrachteten Prozessor $MP_i$ wird die Verteilungsquote $q_i$ vergrößert, bei niedriger Last wird $q_i$ verkleinert. Sind viele der $p_{ij}$ verringert worden, dann ist die Summe der $p_{ij}$ über j kleiner 1 und die Verteilungsquote $q_i$ muß verringert werden.

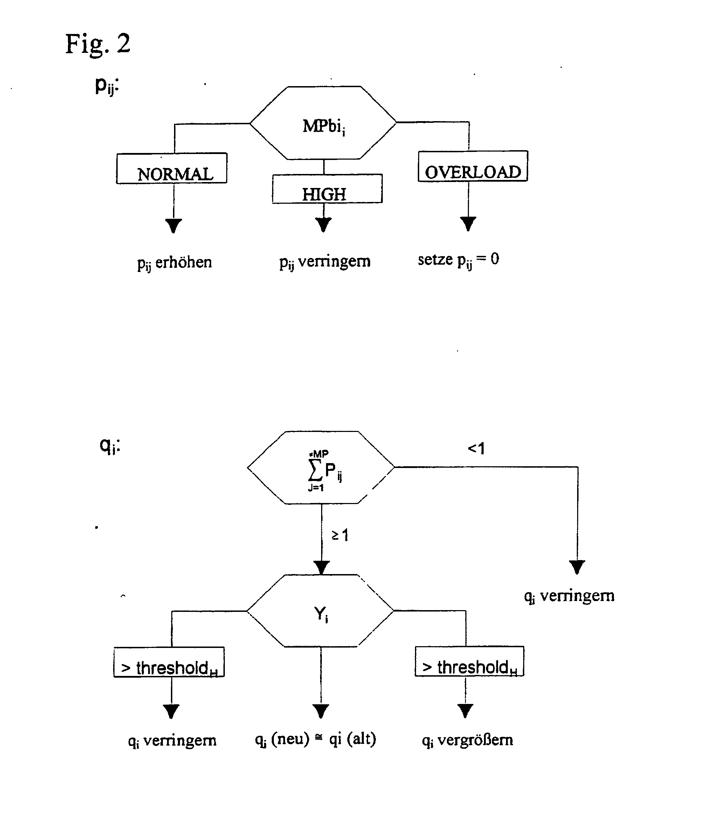

Eine Veranschaulichung dieser Entscheidungen ist in den Figuren 2a und 2b dargestellt. Die Entscheidungsdiagramme zeigen die Aktualisierungsalgorithmen für $p_{ij}$ (Figur 2a) und für Verteilungsquote $q_i$ (Figur 2b), die jedes Zeitintervall CI für den i-ten Prozessor $MP_i$ durchgeführt werden.

Bei dem erfindungsgemäßen Lastverteilungsverfahren (NLB) werden einige Parameter (Konstanten) benötigt, deren Wahl das Verhalten in bestimmten Lastsituationen stark beeinflussen kann. Es ergibt sich in den meisten Fällen ein Konflikt zwischen einem Lastverteilungsverfahren, das schnell auf Laständerungen reagieren kann, und einem stabilen Lastverteilungsverfahren, das nicht zu Schwingungen und zum Weiterverteilen von Aufgaben neigt. "Weiterverteilen" bedeutet hier das gleichzeitige Verteilen von eigener Last und das Bearbeiten von fremder Last auf einem Prozessor.

Folgende Parameterveränderungen bewirken ein schneller reagierendes NLB:

- Das stärkere Verändern von $q_i$ mit: $0,15 < c_{q1}$, $0,1 < c_{q2}$
- Das stärkere Verändern der $p_{ij}$ mit: $0,25 < p_{c1}$, $0,25 < p_{c2}$
- Das spätere Setzen der Lastindikationswerte $MPbi_i$ mit: $threshold_H > 0,7$ (d.h. erst bei höherer Last 'HIGH' an die anderen Prozesssoren MPk melden)

Detailliert verläuft das bevorzugte Verfahren bei einem Multiprozessor-Kommunikationsrechner also wie folgt:

Als Dauer des Zeitintervalls (Kontrollintervall) CI des Zeitrasters, mit dem das Verfahren iterativ abläuft, wird bei den derzeit bekannten Multiprozessorsystemen der Vermittlungstechnik bevorzugt 1 bis 2 Sekunden gewählt. Es ist selbstverständlich, daß mit steigender Prozessorleistung das Zeitintervall gekürzt werden kann.

Jedes Kontrollintervall CI werden die Größen $q_i$, $p_{ij}$, $MPIs_i$ und $MPb_{ij}$ aktualisiert.

Die tatsächlich bearbeitete Last $Y_i$ eines Prozessors $MP_i$ wird als Prozessorlaufzeitgröße, gemessen in Erlang, ermittelt.

Die geschätzte angebotene Last $A_j$ eines Prozessors $MP_i$ wird aus der Verteilquote $q_i$ des aktuellen Kontrollintervalls CI und dem geschätzten verteilbaren Anteil einer durchschnittlichen Aufgabe, zum Beispiel der Abarbeitung eines Calls, ermittelt.

Es gilt:

Die Anzahl der Prozessoren $MP_i$ im Multiprozessorsystem ist n.

$A_i := Y_i/(1 - q_i V)$, wobei V der verteilbare Anteil eines Calls ist.

$MPIs_i$: Load State des i-ten MPs, kann die Werte NORMAL, HIGH, OVERLOAD oder EXTREME annehmen. Zur Berechnung des Load States wird die tatsächlich bearbeitete Last Yi herangezogen. Zur Vermeidung von vorschnellen Änderungen des $NPIs_i$ werden Hysteresen eingeführt. Wird etwa der $MPIs_i$ von NORMAL auf HIGH gesetzt, muß $Y_i > threshold_N + \Delta_+$ sein, wohingegen, um von HIGH nach NORMAL zu kommen, $Y_i < threshold_N - \Delta_-$ sein muß. Diese Vorgehensweise ist auch als High Water-Low Water Methode bekannt. Bei EXTREME muß aus systemtechnischen Gründen der Vermittlungsstelle das Verteilungsverfahren (Load Balancing) für diesen Prozessor $MP_i$ abgeschaltet werden.

$threshold_N$: Ist die Normallastschwelle - nach Berücksichtigung einer Hysterese wird unterhalb dieser der MPIs als NORMAL geführt, oberhalb als HIGH.

$threshold_H$: Hochlastschwelle - nach Berücksichtigung einer Hysterese und einer lastabhängigen zeitlichen Verzögerung (Startindikator) wird unterhalb dieser Schwelle der MPIs als HIGH geführt, oberhalb als OVERLOAD.

Der Lastindikationswert (Balancing Indikator) $MPbi_i$ des i-ten Prozessors $MP_i$ kann die Werte NORMAL, HIGH oder OVERLOAD annehmen. Dieser wird wie der $MPIs_i$ berechnet, nur wird hier anstelle der tatsächlichen Last $Y_i$ die geschätzte angebotene Last $A_i$ zugrundegelegt und andere Werte für $\Delta_+$ und $\Delta_-$ genommen, mit $\Delta_+ = \Delta_- = 0.02$.

Zusätzlich wird ein Overload Level $OL_i$ des Prozessors $MP_i$ bestimmt, der die Werte 0... 6 annehmen kann und als Quantifizierung des Überlastzustandes des Prozessors $MP_i$ gedacht ist. Ist der $OL_i > 0$, werden Calls abgewehrt, je höher der Wert, desto wahrscheinlicher wird ein Call abgewiesen.

Die Last, die von $MP_i$ nach $MP_j$ verteilt werden soll, wird als Wahrscheinlichkeit $p_{ij}$ ausgedrückt und kann somit Werte zwischen 0 und 1 annehmen.

Die Größe des Wertes $p_{ij}$ bestimmt sich durch folgende Kriterien:

- Initialisiere $p_{ij}$ mit $p_{ij}:=(n-1)^{-1}$
- $p_{ii}:= 0$, $MP_i$ soll nicht an sich selbst verteilen.
- Falls $MPbi_j$=NORMAL: $p_{ij}$ --> $p_{ij} + 0.25/n$, j=1,...,n, i≠j. Das alte $p_{ij}$ kann vergrößert werden, weil auf dem Prozessor $MP_j$ noch Platz ist.
- Falls $MPbi_j$=HIGH: $p_{ij}$ --> $p_{ij} - 0.25/n$. Das alte $p_{ij}$ muß verkleinert werden, weil $MP_j$ voll ausgelastet ist.
- Falls $MPbi_j$=OVERLOAD: $p_{ij} = 0$. Es soll keine Last an überlastete Prozessoren $MP_n$ abgeben werden.

Die neu bestimmten $p_{ij}$ müssen noch normiert werden:

Setze $p_{sum}$ = summe $(p_{ij})$ über j=1,..,n und normiere (falls $p_{sum} > 0$) mit $p_{ij}$ --> $p_{ij}/p_{sum}$

Anschließend wird die Verteilungsquote $q_i$ mit den folgenden Kriterien bestimmt:

- Initialisierungswert: $q_i = 0.1$
- Falls der $MPIs_i$ =EXTREME: $q_i = 0.1$. Dieser MP ist so stark überlastet, daß ihn auch der Eigenanteil für einen verteilten Call überfordern würde. Deshalb kein Load Balancing, sondern nur Abwehr; das Load Balancing ist zudem aus systemtechnischen Gründen der Vermittlungsstelle nicht sinnvoll.
- Falls $p_{sum} > 1$, kann offenbar mehr Last verteilt werden. Dann kann $q_i$ nach den Erfordernissen des $MP_i$ bestimmt werden, mit:

    1. Falls der $OL_i > 0$, $q_i$ auf jeden Fall vergrößern mit: $q_i$ --> min $\{q_i + 0.15, 1\}$
    2. Falls $Y_i > threshold_H$, $q_i$ vergrößern mit: $q_i$ --> min $\{ q_i + 0.15, 1\}$
    3. Falls $Y_i < threshold_N$, $q_i$ verkleinern mit: $q_i$ --> max $(q_i - 0.10, 0.1)$.
    4. Andernfalls, falls $threshold_N < Y_i < threshold_H$ gilt:

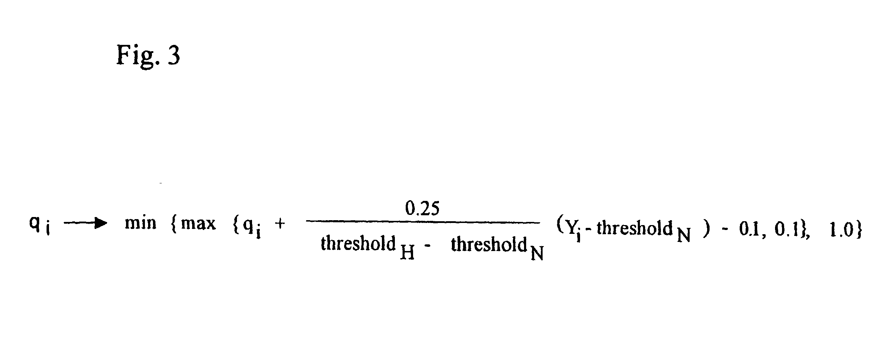

        $q_i$-->min$\{$max$\{q_i+(0.25/(threshold_H-threshold_N))*(Y_i threshold_N)-0.1, 0.1), 1.0\}$
        Dies ist die lineare Interpolation zwischen der obigen Vergrößerung um 0.15 und der obigen Verkleinerung um 0.1. Die Formel ist nochmals in besser lesbarer Weise in der Figur 3 dargestellt.

- Falls $P_{sum} < 1$, wurde offenbar zuviel Last verteilt und $q_i$ muß verkleinert werden mit: $q_i$ --> $q_i * p_{sum}$.
- Der Prozessor $MP_i$ verteilt Last an andere Prozessoren $MP_k$, wenn $q_i > 0.25$ wird.

Das erfindungsgemäße Verfahren weist somit die folgenden Eigenschaften und Vorteile auf:

Ein sehr geringer Informationsoverhead zwischen den am Lastverteilungsverfahren beteiligten Prozessoren. Gegenseitig bekannt sind nur wenige, vorzugsweise dreiwertige Lastzustände, die nur einmal pro Kontrollintervall aktualisiert und verteilt werden.

Für jeden Prozessor gibt es eine Quote, die jedes Kontrollintervall aktualisiert wird und die den Anteil der Last regelt, die vom betrachteten Prozessor an die anderen beteiligten Prozessoren verteilt werden soll.

Für jeden Prozessor gibt es Einzelregulatoren, welche die zu verteilende Last auf die anderen Prozessoren aufteilen.

Das Verfahren ist nicht nur als "Feuerwehrnaßnahme" konzipiert, das erst wirksam wird, wenn ein Prozessor in Überlast gerät und gegebenenfalls Aufgaben (Calls) abgewehrt werden, sondern es setzt die Lastverteilung früher und weicher ein. Dadurch können Dauerschieflastzustände besser und mit weniger abgewiesenen Aufgaben (Calls) verarbeitet werden.

Im erfindungsgemäßen Verfahren werden die Lastzustände, die an die anderen Prozessoren verteilt werden, konsequent anhand der geschätzten angebotenen Last und nicht anhand der tatsächlich bearbeiteten Last ermittelt.

Das Verfahren benötigt kein Load Balancing Flag, das den Einstieg in die Lastverteilung regelt. Der Einstieg wird über die Verteilquote $q_i$ geregelt. Weiterhin sind durch das Fehlen eines Load Balancing Flags gegenseitige Abhängigkeiten zwischen den Lastzuständen und dem Load Balancing Flag eliminiert worden. Dadurch ist eine nachträgliche Anpassung des Algorithmus an veränderte Bedingungen leichter möglich.

Die lastabhängige Veränderung der Einzelregulatoren (Lastverteilungsfaktoren $p_{ij}$) geschieht in Abhängigkeit von der Anzahl n der an der Lastverteilung beteiligten Prozessoren. Somit ist das Verfahren unabhängig von der Anzahl der beteiligten Prozessoren.

Die lastabhängige Veränderung der Verteilungsquoten und der Einzelregulatoren pro Kontrollintervall geschieht so, daß ein zu langsames "Heranschleichen" an den optimalen Wert vermieden wird.

Die lastabhängige Veränderung der Einzelregulatoren vermeidet ein Verharren der Werte auf die Einstellung der vorangegangenen Lastverteilungsperiode während einer Periode ohne Lastverteilung. Es wird vielmehr auf eine Ausgangsstellung zurückgeregelt.

Die aus dem Stand der Technik bekannte Trägheit in der Veränderung der Quoten wurde entfernt, um ein leichteres Nachführen an die tatsächlich vorliegende Lastsituation zu ermöglichen.

Ergänzend ist auf die Definition einiger Begriffe in dieser Anmeldung hinzuweisen:

Der Begriff oder Wortbestandteil "Quote" beschreibt den Bruchteil eines Ganzen mit einem Wertebereich zwischen 0 und 1.

Der Begriff oder Wortbestandteil "Zustand" beschreibt die augenblickliche Situation oder den augenblicklichen, aktuellen Wert einer Größe. So ist z.B. der Lastzustand eines Prozessors als der Wert der aktuellen Last des Prozessors zu verstehen.

Der Begriff Hysterese definiert die Abhängigkeit einer aktuellen Größe von ihren früheren Werten, ihrer Historie oder ihres zeitlichen Verlaufs.

**Patentansprüche**

1. Verfahren zur Lastverteilung in einem Multiprozessorsystem, insbesondere in einem Multiprozessorsystem eines Kommunikationssystems, bei dem anfallende Aufgaben von mehreren Prozessoren $MP_i$ (mit i=1,2,....,n) unter Realzeitbedingungen abgearbeitet werden können, mit folgenden iterativen und sich in Zeitintervallen CI wiederholenden Verfahrensschritten:

   - jeder Prozessor $MP_i$ ermittelt seine tatsächliche aktuelle Last $Y_i$ und schätzt in Abhängigkeit von seiner zuvor betimmten Verteilungsquote $q_i$(alt) und dem typischerweise verteilbaren Anteil V einer typischen Aufgabe seine angebotene Last $A_i$, die zu einem Lastindikationswert (Balancing Indicator) $MPbi_i$ führt, wobei der Lastindikationswert $MPb_1$ einen Wert aus einer Menge mehrerer Werte annehmen kann und die Verteilungsquote $q_i$ den, an andere Prozessoren $MP_k$ verteilbaren, Lastanteil darstellt,
   - jeder Prozessor $MP_i$ teilt seinen Lastindikationswert $MPbi_i$ den jeweils anderen Prozessoren $MP_k$ (mit k=1,2,...i-1,i+1,...n) mittelbar oder unmittelbar mit,
   - jeder Prozessor $MP_i$ bestimmt seine Lastverteilungswahrscheinlichkeiten $p_{ij}$ (mit j=1,2,....n) in Abhängigkeit von den Lastindikationswerten $MPbi_k$ dieser anderen Prozessoren $MP_k$, wobei die Lastverteilungswahrscheinlichkeiten $p_{ij}$ die Wahrscheinlichkeit angeben, dass bei Lastverteilung Last vom i-ten Prozessor $MP_i$ auf den j-ten Prozessor $MP_j$ übertragen wird,
   - jeder Prozessor $MP_i$ bestimmt seine Verteilungsquote $q_i$(neu) in Abhängigkeit von seiner tatsächlichen aktuellen Last $Y_i$ und den Lastverteilungsfaktoren $p_{ij}$
   - jeder Prozessor $MP_i$ verteilt anhand seiner Quote $q_i$ und seiner Lastverteilungsfaktoren $p_{ij}$ seine verteilbare Last an andere Prozessoren $MP_k$ wenn seine Verteilquote $q_i$(neu) einen vorgegebenen Wert $q_V$ überschreitet.

2. Verfahren gemäß dem voranstehenden Anspruch 1, **dadurch gekennzeichnet, daß** die geschätzte angebotene Last $A_i$ eines Prozessors $MP_i$ nach der Formel $A_i:=Y_i/(1-q_iV)$ errechnet wird.

3. Verfahren gemäß einem der voranstehenden Ansprüche, **dadurch gekennzeichnet, daß** der Lastindikationswert (balancing indicator) $MPbi_i$ drei diskrete Werte, vorzugsweise die Werte NORMAL, HIGH und OVERLOAD, wobei NORMAL einer Prozessorauslastung von 0 bis 70%, HIGH einer Prozessorauslastung von 70% bis 85% und OVERLOAD einer Prozessorauslastung von 85% bis 100% entspricht, annehmen kann.

4. Verfahren gemäß dem voranstehenden Anspruch 3, **dadurch gekennzeichnet, daß** der Lastindikationswert (balancing indicator) $MPbi_i$ bezüglich Änderungen einer Hysterese unterliegt.

**5.** Verfahren gemäß einem der voranstehenden Ansprüche, **dadurch gekennzeichnet, daß** als typischer verteilbarer Anteil V der durchschnittliche oder maximale verteilbare Anteil einer typischen Aufgabe CallP gilt.

**6.** Verfahren gemäß dem voranstehenden Anspruch 5, **dadurch gekennzeichnet, daß** der durchschnittliche oder maximale verteilbare Anteil einer typischen Aufgabe ständig als gleitender Durchschnitt oder gleitender Maximalwert über eine vorgegebene Zeitspanne $t_D$ ermittelt wird.

**7.** Verfahren gemäß dem voranstehenden Anspruch 6, **dadurch gekennzeichnet, daß** für die vorgegebene Zeitspanne $t_D$ gilt: $t_D \gg CI$.

**8.** Verfahren gemäß einem der voranstehenden Ansprüche, **dadurch gekennzeichnet, daß** als typische Aufgabe eine durchschnittliche oder maximale Aufgabe angenommen wird.

**9.** Verfahren gemäß dem voranstehenden Anspruch 5, **dadurch gekennzeichnet, daß** die durchschnittliche oder maximale Aufgabe ständig als gleitender Durchschnitt oder gleitender Maximalwert über eine vorgegebene Zeitspanne $t_D$ ermittelt wird.

**10.** Verfahren gemäß dem voranstehenden Anspruch 9, **dadurch gekennzeichnet, daß** für die vorgegebene Zeitspanne $t_D$ gilt: $t_D \gg CI$.

**11.** Verfahren gemäß einem der voranstehenden Ansprüche, **dadurch gekennzeichnet, daß** für den vorgegebenen Wert $q_v$ der Verteilquote $q_i$, ab dem der Prozessor MPi verteilbare Last an andere Prozessoren $MP_k$ verteilt gilt: $0.05 < q_v < 0.3$, vorzugsweise $0.1 < q_v < 0.25$, vorzugsweise $q_v = 0.2$.

**12.** Verfahren gemäß einem der voranstehenden Ansprüche, **dadurch gekennzeichnet, daß** die Berechnung der Lastverteilungswahrscheinlichkeiten $p_{ij}$ unter Verwendung der Konstanten $p_{c1}$ und $p_{c2}$ die folgenden Kriterien erfüllt:

- $p_{ii} := 0$
- falls $MPbi_j$ einer mittleren Last entspricht, vorzugsweise $MPbi_j = NORMAL$, gilt:

$$p_{ij}(neu) = pij(alt) + p_{c1}/n,$$

  für j=1,...,n und i≠j
- falls $MPbi_j$ einer hohen Last entspricht, vorzugsweise $MPbi_j = HIGH$ gilt:

$$p_{ij}(neu) = pij(alt) - p_{c2}/n,$$

  für j=1,...,n und i≠j
- falls $MPbi_j$ einer Überlast entspricht, vorzugsweise $MPbi_j = OVERLOAD$, gilt:

$$p_{ij}(neu) = 0$$

- wobei die $p_{ij\ (j=1,..,n)}$ mit der Summe $p_{sum}$ der $p_{ij}$ auf 1 normiert werden und
- als Initialisierungswert beim Beginn der Verteilungsprozesse alle $p_{ij}$, ausgenommen $p_{ii}$, gleich sind.

**13.** Verfahren gemäß dem voranstehenden Anspruch 12, **dadurch gekennzeichnet, daß** für die Konstante $p_{c1}$ gilt: $0.1 < p_{c1} < 0.5$, vorzugsweise $0.2 < p_{c1} < 0.3$, vorzugsweise $p_{c1} = 0.25$.

**14.** Verfahren gemäß einem der voranstehenden Ansprüche 12-13, **dadurch gekennzeichnet, daß** für die Konstante $p_{c2}$ gilt: $0.1 < p_{c2} < 0.5$, vorzugsweise $0.2 < p_{c2} < 0.3$, vorzugsweise $p_{c2} = 0.25$.

**15.** Verfahren gemäß einem der voranstehenden Ansprüche 12-14, **dadurch gekennzeichnet, daß** der Initialisierungswert der $p_{ij}$ beim Beginn der Verteilungsprozesse gleich $(n-1)^{-1}$ gesetzt wird.

**16.** Verfahren gemäß einem der voranstehenden Ansprüche 12-15, **dadurch gekennzeichnet, daß** jeder Prozessor $MP_i$ anhand seiner tatsächlichen aktuellen Last $Y_i$ einen Laststatus (load state) $MPls_i$ bestimmt, der einen Wert aus einer Menge mehrerer Werte annehmen kann, und die Berechnung seiner Lastverteilungsquote $q_i$ unter Verwendung der Werte $q_{c1}$, $c_{q1}$, $c_{q2}$, $c_{q3}$ die folgenden Kriterien erfüllt:

- falls $MPls_i$ der höchsten Last entspricht gilt:

$$q_i(neu) = q_{c1},$$

- falls $p_{sum} \geq 1$ gilt:

  - falls die tatsächliche aktuelle Last $Y_i$ größer als ein vorgegebener Wert $threshold_H$ ist, wird $q_i$ vergrößert mit $qi = min\{q_i + c_{q1}, 1\}$,
  - falls die tatsächliche aktuelle Last $Y_i$ kleiner als ein vorgegebener Wert $threshold_N$ ist, wird $q_i$ verkleinert mit $q_i = max\{q_i - c_{q2}, c_{q3}\}$, mit $0 < c_{q3} < q_v$, vorzugsweise $c_{q3} = 0.1$,
  - andernfalls $(threshol\ d_N \leq Y_i \leq threshold_H)$ erhält qi einen Zwischenwert zwischen den beiden oben genannten Alternativen, vorzugsweise durch lineare Interpolation

- falls $p_{sum} \leq 1$ gilt: $q_i(neu) = q_i(alt) * p_{sum}$.

**17.** Verfahren gemäß dem voranstehenden Anspruch 16, **dadurch gekennzeichnet, daß** der Laststatus (load state) $MPls_i$ bezüglich Änderungen einer Hysterese unterliegt.

**18.** Verfahren gemäß einem der voranstehenden Ansprüche 16 - 17, **dadurch gekennzeichnet, daß** der Laststatus (load state) $MPls_i$ vier diskrete Werte, vorzugsweise NORMAL (=0 bis 0,7), HIGH (=0,7 bis 0,85), OVERLOAD (=0,85 bis 1) und EXTREME (wenn Laststatus über mehrere CI OVERLOAD) annehmen kann.

**19.** Verfahren gemäß einem der voranstehenden Ansprüche 16 - 18, **dadurch gekennzeichnet, daß** für die Konstante $c_{q1}$ gilt: $0,05 < c_{q1} < 0,3$, vorzugsweise $0,1 < c_{q1} < 0,2$, vorzugsweise $c_{q1} = 0,15$.

**20.** Verfahren gemäß einem der voranstehenden Ansprüche 16 - 19, **dadurch gekennzeichnet, daß** für die Konstante $c_{q2}$ gilt: $0,05 < c_{q2} < 0,2$, vorzugsweise $c_{q2} = 0,10$.

**21.** Verfahren gemäß einem der voranstehenden Ansprüche 16 - 20, **dadurch gekennzeichnet, daß** für die Konstante $threshold_N$ gilt: $0,6 < threshold_N < 0,8$, vorzugsweise $threshold_N = 0,7$.

**22.** Verfahren gemäß einem der voranstehenden Ansprüche 16 - 21, **dadurch gekennzeichnet, daß** für die Konstante $threshold_H$ gilt: $0,7 < threshold_H < 0,95$, vorzugsweise $threshold_H = 0,85$.

**23.** Verfahren gemäß einem der voranstehenden Ansprüche, **dadurch gekennzeichnet, daß** zusätzlich zur Quantifizierung des Überlastzustandes der Prozessoren ein Überlastwert $OL_i$ der Prozessoren $MP_i$ ermittelt wird, der ein Maß für die Größe der Überlast ist, mit $OL_i = 0,1,...m$ und die Verteilquote $q_i$ auf jeden Fall vergrößert wird, falls der Betrag von $OL_i$ größer 0 wird und $q_i(neu) := min\{qi(alt) + c_{q1}, 1\}$ gesetzt wird.

**24.** Multiprozessorsystem, insbesondere eines Kommunikationssystems, mit mehreren Prozessoren $MP_i$ (mit $i = 1,2,....,n$) zur Ausführung anfallender Aufgaben unter Realzeitbedingungen, wobei:

- jeder Prozessor $MP_i$ Mittel aurweist, um seine tatsächliche aktuelle Last $Y_i$ zu bestimmen, und, in Abhängigkeit von seiner zuvor bertimmten Verteilungsquote $q_i(alt)$ und dem typischerweise verteilbaren Anteil V einer typischen Aufgabe, seine angebotene Last $A_i$ zu schätzen, die zu einem Lastindikationswert (Balancing Indicator) $MPbi_i$ führt, wobei wobei der Lastindikationswert $MPb_1$ einen Wert aus einer Menge mehrerer Werte annehmen kann und die Verteilungsquote $q_i$ den, an andere Prozessoren $MP_k$ verteilbaren, Lastanteil darstellt,

- jeder Prozessor $MP_i$ Mittel aufweist, um seinen Lastindikationswert $MPbi_i$ den jeweils anderen Prozessoren $MP_k$ (mit $k = 1,2,...i-1,i+1,...n$) mittelbar oder unmittelbar mitzuteilen,

- jeder Prozessor $MP_i$ Mittel aufweist, um seine Lastverteilungswahrscheinlichkeiten $p_{ij}$ (mit $j = 1,2,....n$) in Abhängigkeit von den Lastindikationswerten $MPbi_k$ dieser anderen Prozessoren $MP_k$ zu bestimmen, wobei die Lastverteilungswahrscheinlichkeiten $p_{ij}$ die Wahrscheinlichkeit angeben, dass bei Lastverteilung Last vom i-ten Prozessor $MP_i$ auf den j-ten Prozessor $MP_j$ übertragen wird,

- jeder Prozessor $MP_i$ Mittel aufweist, um seine Verteilquote $q_i(neu)$ in Abhängigkeit von seiner tatsächlichen aktuellen Last $Y_i$ und den Lastverteilungsfaktoren $p_{ij}$ zu bestimmen, und

- jeder Prozessor $MP_i$ Mittel aufweist, um anhand seiner Quote $q_i$ und seiner Lastverteilungsfaktoren $p_{ij}$ seine verteilbare Last an andere Prozessoren $MP_k$ zu verteilen, wenn seine Verteilquote $q_i(neu)$ einen vorgegebenen Wert $q_v$ überschreitet,
und wobei dem Multiprozessorsystem eines der Verfahren gemäß einem der Ansprüche 1-23 implementiert ist.

**Claims**

**1.** Method for load distribution in a multiprocessor system, in particular in a multiprocessor system of a communication system, in which tasks that arise can be processed by a plurality of processors $MP_i$ (where $i = 1,2,...,n$) under real-time conditions, having the following iterative method steps that are repeated at time intervals CI:

- each processor $MP_i$ determines its actual current load $Y_i$ and estimates as a function of its previously determined distribution quota $q_i(old)$ and the typically distributable proportion V of a typical task its offered load $A_i$, which leads to a load indication value (balancing indicator) $MPbi_i$, the load indication value $MPb_i$ being able to assume a value from a set of a plurality of values, and the distribution quota $q_i$ representing the load proportion which can be distributed to other processors $MP_k$,

- each processor $MP_i$ indirectly or directly communicates its load indication value $MPbi_i$ to the respective other processors $MP_k$ (where $k = 1,2,...i-1,i+1,...n$),

- each processor $MP_i$ determines its load distribution probabilities $p_{ij}$ (where $j = 1,2,...n$) as a function of the load indication values $MPbi_k$ of

said other processors $MP_k$, the load distribution probabilities $p_{ij}$ indicating the probability that, in the event of load distribution, load will be transferred from the i-th processor $MP_i$ to the j-th processor $MP_j$,

- each processor $MP_i$ determines its distribution quota $q_i$(new) as a function of its actual current load $Y_i$ and the load distribution factors $p_{ij}$
- on the basis of its quota $q_i$ and its load distribution factors $p_{ij}$, each processor $MP_i$ distributes its distributable load to other processors $MP_k$ if its distribution quota $q_i$(new) exceeds a predetermined value $q_v$.

2. Method according to the preceding Claim 1, **characterized in that** the estimated offered load $A_i$ of a processor $MP_i$ is calculated according to the formula $A_i := Y_i/(1-q_iV)$.

3. Method according to one of the preceding claims, **characterized in that** the load indication value (balancing indicator) $MPbi_i$ can assume three discrete values, preferably the values NORMAL, HIGH and OVERLOAD, where NORMAL corresponds to a processor capacity utilization of from 0 to 75%, HIGH corresponds to a processor capacity utilization of from 70% to 85% and OVERLOAD corresponds to a processor capacity utilization of from 85% to 100%.

4. Method according to the preceding Claim 3, **characterized in that** the load indication value (balancing indicator) $MPbi_i$ is subject to a hysteresis with regard to changes.

5. Method according to one of the preceding claims, **characterized in that** the average or maximum distributable proportion of a typical task CallP is regarded as the typical distributable proportion V.

6. Method according to the preceding Claim 5, **characterized in that** the average or maximum distributable proportion of a typical task is continually determined as moving average or moving maximum value over a predetermined time period $t_D$.

7. Method according to the preceding Claim 6, **characterized in that** the following holds true for the predetermined time period $t_D$: $t_D \gg CI$.

8. Method according to one of the preceding claims, **characterized in that** an average or maximum task is assumed as the typical task.

9. Method according to the preceding Claim 5, **characterized in that** the average or maximum task is continually determined as moving average or moving maximum value over a predetermined time period $t_D$.

10. Method according to the preceding Claim 9, **characterized in that** the following holds true for the predetermined time period $t_D$: $t_D \gg CI$.

11. Method according to one of the preceding claims, **characterized in that** the following holds true for the predetermined value $q_v$ of the distribution quota $q_i$ starting from which the processor MPi distributes distributable load to other processors $MP_k$: $0.05 < q_v < 0.3$, preferably $0.1 < q_v < 0.25$, preferably $q_v = 0.2$.

12. Method according to one of the preceding claims, **characterized in that** the calculation of the load distribution probabilities $p_{ij}$ using the constants $p_{c1}$ and $p_{c2}$ satisfies the following criteria:

- $p_{ii}$: = 0
- if $MPbi_j$ corresponds to an average load, preferably $MPbi_j$ = NORMAL, the following holds true:

$$p_{ij}(new) = pij(old) + p_{c1}/n,$$

for j=1,..., and i≠j
- if $MPbi_j$ corresponds to a high load, preferably $MPbi_j$=HIGH, the following holds true:

$$p_{ij}(new) = pij(old) - p_{c2}/n,$$

for j=1,..,n and i≠j
- if $MPbi_j$ corresponds to an overload, preferably $MPbi_j$=OVERLOAD, the following holds true:

$$p_{ij}(new) = 0$$

- in which case the $p_{ij\ (j=1,...,n)}$ are normalized to 1 with the sum $p_{sum}$ of the $p_{ij}$ and
- as initialization value at the beginning of the distribution processes, all $p_{ij}$, excluding $p_{ii}$, are identical.

13. Method according to the preceding Claim 12, **characterized in that** the following holds true for the constant $p_{c1}$:

$$0.1 < p_{c1} < 0.5,$$

preferably $0.2 < p_{c1} < 0.3$, preferably

$$p_{c1} = 0.25.$$

**14.** Method according to one of the preceding Claims 12-13, **characterized in that** the following holds true for the constant $p_{c2}$: $0.1 < p_{c2} < 0.5$, preferably $0.2 < p_{c2} < 0.3$, preferably $p_{c2} = 0.25$.

**15.** Method according to one of the preceding Claims 12-14, **characterized in that** the initialization value of the $p_{ij}$ at the beginning of the distribution processes is set to be equal to $(n-1)^{-1}$.

**16.** Method according to one of the preceding Claims 12-15, **characterized in that** each processor $MP_i$ determines a load status (load state) $MPls_i$, which can assume a value from a set of a plurality of values, on the basis of its actual current load $Y_i$, and the calculation of its load distribution quota $q_i$ using the values $q_{c1}$, $c_{q1}$, $c_{q2}$, $c_{q3}$ satisfies the following criteria:

- if $MPls_i$ corresponds to the highest load, the following holds true:

$$q_i(new) = q_{c2},$$

- if $p_{sum} \geq 1$ holds true:

- if the actual current load $Y_i$ is greater than a predetermined value $threshold_H$, $q_i$ is increased where $q_i = min\{q_i + c_{q1}, 1\}$,
- if the actual current load $Y_i$ is less than a predetermined value $threshold_N$, $q_i$ is decreased where $q_i = max\{q_i - cq_2, c_{q3}\}$, where $0 < c_{q3} < q_v$, preferably $c_{q3} = 0.1$,
- otherwise ($threshold_N \leq Y_i \leq threshold_H$), qi obtains an intermediate value between the two alternatives mentioned above, preferably by linear interpolation
- if $P_{sum} \leq 1$ holds true: $q_i(new) = q_i(old) * p_{sum}$.

**17.** Method according to the preceding Claim 16, **characterized in that** the load status (load state) $MPls_i$ is subject to a hysteresis with regard to changes.

**18.** Method according to one of the preceding Claims 16-17, **characterized in that** the load status (load state) $MPls_i$ can assume four discrete values, preferably NORMAL (=0 to 0.7), HIGH (=0.7 to 0.85), OVERLOAD (=0.85 to 1) and EXTREME (if load status over a plurality of CI OVERLOAD).

**19.** Method according to one of the preceding Claims 16-18, **characterized in that** the following holds true for the constant $c_{q1}$: $0.05 < c_{q1} < 0.3$, preferably $0.1 < c_{q1} < 0.2$, preferably $c_{q1} = 0.15$.

**20.** Method according to one of the preceding Claims 16-19, **characterized in that** the following holds true for the constant $c_{q2}$: $0.05 < c_{q2} < 0.2$, preferably $c_{q2} = 0.10$.

**21.** Method according to one of the preceding Claims 16-20, **characterized in that** the following holds true for the constant $threshold_N$: $0.6 < threshold_N < 0.8$, preferably $threshold_N = 0.7$.

**22.** Method according to one of the preceding Claims 16-21, **characterized in that** the following holds true for the constant $threshold_H$: $0.7 < threshold_H < 0.95$, preferably $threshold_H = 0.85$.

**23.** Method according to one of the preceding claims, **characterized in that** an overload value $OL_i$ of the processors $MP_i$ is additionally determined for the purpose of quantifying the overload state of the processors, which overload value is a measure of the magnitude of the overload, where $OL_i = 0, 1, ... m$ and the distribution quota $q_i$ is increased in any case if the magnitude of $OL_i$ becomes greater than 0 and $q_i(new) := min\{qi(old) + c_{q1}, 1\}$ is set.

**24.** Multiprocessor system, in particular of a communication system, having a plurality of processors $MP_i$ (where i=1,2,...,n) for executing tasks that arise under real-time conditions, in which case:

- each processor $MP_i$ has means for determining its actual current load $Y_i$ and for estimating as a function of its previously determined distribution quota $q_i(old)$ and the typically distributable proportion V of a typical task its offered load $A_i$, which leads to a load indication value (balancing indicator) $MPbi_i$, the load indication value $MPb_i$ being able to assume a value from a set of a plurality of values, and the distribution quota $q_i$ representing the load proportion which can be distributed to other processors $MP_k$,
- each processor $MP_i$ has means for indirectly or directly communicating its load indication value $MPbi_i$ to the respective other processors $MP_k$ (where k = 1,2,...i-1,i+1,...n),
- each processor $MP_i$ has means for determining its load distribution probabilities $p_{ij}$ (where j = 1,2,...n) as a function of the load indication values $MPbi_k$ of said other processors $MP_k$, the load distribution probabilities $p_{ij}$ indicating the probability that, in the event of load distribution, load will be transferred from the i-th processor $MP_i$ to the j-th processor $MP_j$,
- each processor $MP_i$ has means for determining its distribution quota $q_i(new)$ as a function of its actual current load $Y_i$ and the load distribution factors $p_{ij}$ and
- each processor $MP_i$ has means for distributing, on the basis of its quota $q_i$ and its load distribution factors $p_{ij}$, its distributable load to other

processors $MP_k$ if its distribution quota $q_i$(new) exceeds a predetermined value $q_v$,

and in the multiprocessor system, one of the methods according to one of Claims 1-23 is implemented.

**Revendications**

1. Procédé pour la répartition de charge dans un système multiprocesseur, notamment dans un système multiprocesseur d'un système de communication, selon lequel des tâches arrivant de plusieurs processeurs $MP_i$ (avec i = 1, 2, ..., n) peuvent être traitées dans des conditions de temps réel, avec les étapes de procédé suivantes, itératives et se répétant à intervalles de temps réguliers CI :

   - chaque processeur $MP_i$ détermine sa charge réelle actuelle $Y_i$ et estime en fonction de son quota de répartition déterminé avant $q_i$(alt) et en fonction de la part typiquement répartissable V d'une tâche typique sa charge offerte $A_i$ qui conduit à une valeur indicatrice de charge (Balancing Indicator) $MPbi_j$, la valeur indicatrice de charge MPbi pouvant prendre une valeur parmi un ensemble de plusieurs valeurs et le quota de répartition $q_i$ représentant la part de charge répartissable sur d'autres processeurs MPk,
   - chaque processeur $MP_i$ transmet directement ou indirectement sa valeur indicatrice de charge $MPbi_i$ aux autres processeurs respectifs $MP_k$ (avec k=1,2,...,i-1,i+1,...,n),
   - chaque processeur $MP_i$ détermine ses probabilités de répartition de charge $p_{ij}$ (avec j = 1, 2, ..., n) en fonction des valeurs indicatrices de charge $MPbi_k$ de ces autres processeurs $MP_k$, les probabilités de répartition de charge $p_{ij}$ donnant la probabilité pour que, en cas de répartition de charge, une charge soit transférée du i-ème processeur $MP_i$ au j-ème processeur $MP_j$,
   - chaque processeur $MP_i$ détermine son quota de répartition $q_i$(neu) en fonction de sa charge réelle actuelle $Y_i$ et des facteurs de répartition de charge $P_{ij}$,
   - chaque processeur $MP_i$ répartit à l'aide de son quota $q_i$ et de ses facteurs de répartition de charge $p_{ij}$ sa charge répartissable sur d'autres processeurs $MP_k$ si son quota de répartition $q_i$(neu) dépasse une valeur prédéterminée $q_v$.

2. Procédé selon la revendication précédente 1, **caractérisé en ce que** la charge offerte estimée $A_i$ d'un processeur $MP_i$ est calculée selon la formule $A_i := Y_i/(1-q_iV)$.

3. Procédé selon l'une des revendications précédentes, **caractérisé en ce que** la valeur indicatrice de charge (balancing indicator) $MPbi_i$ peut prendre trois valeurs discrètes, de préférence les valeurs NORMAL, HIGH et OVERLOAD, NORMAL correspondant à une charge de processeur comprise entre 0 et 70%, HIGH à une charge de processeur comprise entre 70 et 85% et OVERLOAD à une charge de processeur comprise entre 85 et 100%.

4. Procédé selon la revendication précédente 3, **caractérisé en ce que**, pour ce qui est de ses variations, la valeur indicatrice de charge (balancing indicator) $MPbi_i$ est basée sur une hystérésis.

5. Procédé selon l'une des revendications précédentes, **caractérisé en ce qu'**on a comme part répartissable typique V la part répartissable moyenne ou maximale d'une tâche typique CalIP.

6. Procédé selon la revendication précédente 5, **caractérisé en ce que** la part répartissable moyenne ou maximale d'une tâche typique est déterminée constamment comme moyenne glissante ou comme valeur maximale glissante sur un intervalle de temps prédéterminé $t_D$.

7. Procédé selon la revendication 6, **caractérisé en ce qu'**on a pour l'intervalle de temps prédéterminé $t_D$ : $t_D \gg CI$.

8. Procédé selon l'une des revendications précédentes, **caractérisé en ce qu'**on prend comme tâche typique une tâche moyenne ou maximale.

9. Procédé selon la revendication précédente 5, **caractérisé en ce que** la tâche moyenne ou maximale est constamment déterminée comme moyenne glissante ou valeur maximale glissante sur un intervalle de temps prédéterminé $t_D$.

10. Procédé selon la revendication précédente 9, **caractérisé en ce qu'**on a pour l'intervalle de temps prédéterminé $t_D$ : $t_D \gg CI$.

11. Procédé selon l'une des revendications précédentes, **caractérisé en ce que**, pour la valeur prédéterminée $q_v$ du quota de répartition $q_i$ à partir de laquelle le processeur $MP_i$ répartit une charge répartissable sur d'autres processeurs MPk, on a: $0,05 < q_v < 0,3$, de préférence $0,1 < q_v < 0,25$, de préférence $q_v = 0,2$.

12. Procédé selon l'une des revendications précédentes, **caractérisé en ce que** le calcul des probabilités de répartition de charge $p_{ij}$ en utilisant les constantes $p_{c1}$ et $p_{c2}$ vérifie les critères suivants :

   - $p_{ii} := 0$

- si MPbi$_j$ correspond à une charge moyenne, de préférence MPbi$_j$ = NORMAL, on a : $p_{ij}(neu) = p_{ij}(alt)+p_{c1}/n$, pour $j = 1,..., n$ et $i \neq j$
- si MPbi$_j$ correspond à une charge élevée, de préférence MPbi$_j$ = HIGH, on a : $p_{ij}(neu) = p_{ij}(alt)-p_{c2}/n$, pour $j = 1, ..., n$ et $i \neq j$
- si MPbi$_j$ correspond à une surcharge, de préférence MPbi$_j$ = OVERLOAD, on a : $p_{ij}(neu) = 0$
- les $p_{ij}$ ($j = 1, ..., n$) étant normés avec la somme $p_{sum}$ des $p_{ij}$ sur 1 et
- comme valeur d'initialisation au début des processus de répartition, tous les $p_{ij}$, sauf $p_{ii}$, étant égaux.

13. Procédé selon la revendication précédente 12, **caractérisé en ce que**, pour la constante $p_{c1}$, on a : $0,1<p_{c1}<0,5$, de préférence $0,2<p_{c1}<0,3$ et de préférence $p_{c1}=0,25$.

14. Procédé selon l'une des revendications précédentes 12 à 13, **caractérisé en ce que**, pour la constante $p_{c2}$, on a : $0,1<p_{c2}<0,5$, de préférence $0,2<p_{c2}<0,3$ et de préférence $p_{c2}=0,25$.

15. Procédé selon l'une des revendications précédentes 12 à 14, **caractérisé en ce que** la valeur d'initialisation des $p_{ij}$ au début des processus de répartition est posée égale à $(n-1)^{-1}$.

16. Procédé selon l'une des revendications précédentes 12 à 15, **caractérisé en ce que** chaque processeur MP$_i$ détermine à l'aide de sa charge réelle actuelle Y$_i$ un état de charge (load state) MPIs$_i$, qui peut prendre une valeur parmi un ensemble de plusieurs valeurs, et que le calcul de son quota de répartition de charge q$_i$ en utilisant les valeurs $q_{c1}$, $c_{q1}$, $c_{q2}$, $c_{q3}$ vérifie les critères suivants :

- si MPIs$_i$ correspond à la charge maximale, on a : $q_i(neu)=q_{c1}$,
- si $p_{sum} \geq 1$, on a :

-- si la charge réelle actuelle Y$_i$ est supérieure à une valeur prédéterminée threshold$_H$, q$_i$ est augmenté avec $q_i=min\{q_i+c_{q1},1\}$,
-- si la charge réelle actuelle Y$_i$ est inférieure à une valeur prédéterminée threshold$_N$, q$_i$ est diminué avec $q_i=max\{q_i-c_{q2}, c_{q3}\}$, avec $0<c_{q3}<q_v$, de préférence $c_{q3}=0,1$
-- sinon, (threshold$_N \leq$ Y$_i \leq$ threshold$_H$), q$_i$ reçoit une valeur intermédiaire entre les deux alternatives mentionnées ci-dessus, de préférence par interpolation linéaire,

- si $p_{sum} \leq 1$, on a : $q_i(neu) = q_i(alt) * p_{sum}$.

17. Procédé selon la revendication précédente 16, **caractérisé en ce que**, pour ce qui est de ses variations, l'état de charge (load state) MPIs$_i$ est basé sur une hystérésis.

18. Procédé selon l'une des revendications précédentes 16 à 17, **caractérisé en ce que** l'état de charge (load state) MPIs$_i$ peut prendre quatre valeurs discrètes, de préférence NORMAL (=0 à 0,7), HIGH (=0,7 à 0,85), OVERLOAD (=0,85 à 1) et EXTREME (si l'état de charge est OVERLOAD sur plusieurs intervalles de contrôle CI).

19. Procédé selon l'une des revendications précédentes 16 à 18, **caractérisé en ce que**, pour la constante $c_{q1}$, on a: $0,05<c_{q1}<0,3$, de préférence $0,1<c_{q1}<0,2$, de préférence $c_{q1}=0,15$.

20. Procédé selon l'une des revendications précédentes 16 à 19, **caractérisé en ce que**, pour la constante $c_{q2}$, on a: $0,05<c_{q2}<0,2$, de préférence $c_{q2}=0,10$.

21. Procédé selon l'une des revendications précédentes 16 à 20, **caractérisé en ce que**, pour la constante threshold$_N$, on a : $0,6 <$ threshold$_N < 0,8$, de préférence threshold$_N = 0,7$.

22. Procédé selon l'une des revendications précédentes 16 à 21, **caractérisé en ce que**, pour la constante threshold$_H$, on a : $0,7 <$ threshold$_H < 0,95$, de préférence threshold$_H = 0,85$.

23. Procédé selon l'une des revendications précédentes, **caractérisé en ce que**, en plus de la quantification de l'état de surcharge des processeurs, on détermine une valeur de surcharge OL$_i$ des processeurs MP$_i$ qui est une mesure pour la grandeur de la surcharge, avec OL$_i = 0, 1, ..., m$, et on augmente le quota de répartition q$_i$ dans tous les cas, si la valeur de OL$_i$ devient supérieure à 0 avec q$_i$(neu): $=min\{q_i(alt)+c_{q1},1\}$.

24. Système multiprocesseur, notamment d'un système de communication, avec plusieurs processeurs MP$_i$ (avec $i = 1, 2, ..., n$) pour la réalisation de tâches dans des conditions de temps réel, dans lequel :

- chaque processeur MP$_i$ comporte des moyens pour déterminer sa charge réelle actuelle Y$_i$ et pour estimer en fonction de son quota de répartition déterminé avant q$_i$(alt) et en fonction de la part typiquement répartissable V d'une tâche typique sa charge offerte A$_i$ qui conduit à une valeur indicatrice de charge (Balancing Indicator) MPbi$_i$, la valeur indicatrice de charge MPb$_i$ pouvant prendre une valeur parmi un ensemble de plusieurs valeurs et le quota de répartition q$_i$ représentant la part de charge répartissable sur d'autres processeurs MP$_k$,

- chaque processeur $MP_i$ comporte des moyens pour transmettre directement ou indirectement sa valeur indicatrice de charge $MPbi_i$ aux autres processeurs respectifs $MP_k$ (avec k = 1, 2, ..., i-1, i+1, ..., n),

- chaque processeur $MP_i$ comporte des moyens pour déterminer ses probabilités de répartition de charge $p_{ij}$ (avec j = 1, 2, ..., n) en fonction des valeurs indicatrices de charge $MPbi_k$ de ces autres processeurs $MP_k$, les probabilités de répartition de charge $p_{ij}$ donnant la probabilité pour que, en cas de répartition de charge, une charge soit transférée du i-ème processeur $MP_i$ au j-ème processeur $MP_j$,

- chaque processeur $MP_i$ comporte des moyens pour déterminer son quota de répartition $q_i$ (neu) en fonction de sa charge réelle actuelle $Y_i$ et des facteurs de répartition de charge $p_{ij}$, et

- chaque processeur $MP_i$ comporte des moyens pour répartir à l'aide de son quota $q_i$ et de ses facteurs de répartition de charge $p_{ij}$ sa charge répartissable sur d'autres processeurs $MP_k$ si son quota de répartition $q_i$(neu) dépasse une valeur prédéterminée $q_v$,

l'un des procédés selon l'une des revendications 1 à 23 étant installé dans le système multiprocesseur.

Fig. 1

Lastangebot

$A_1$

$a\,q_1$

$Y_1$

$a\,q_1\,p_{12}$

$a\,q_1\,p_{13}$

$a\,q_1\,p_{14}$

| MP$_1$ | MP$_2$ | MP$_3$ | MP$_4$ |
| --- | --- | --- | --- |
| $Y_1$ | $Y_2$ | $Y_3$ | $Y_4$ |
| $A_1$ | $A_2$ | $A_3$ | $A_4$ |
| $q_1$ | $q_2$ | $q_3$ | $q_4$ |

EP 1 149 338 B1

# Fig. 2

$p_{ij}$:

MPbi$_i$

NORMAL          HIGH          OVERLOAD

$p_{ij}$ erhöhen          $p_{ij}$ verringern          setze $p_{ij} = 0$

$q_i$:

$$\sum_{J=1}^{MP} P_{ij}$$

< 1

≥ 1

$q_i$ verringern

Y$_i$

> threshold$_H$          > threshold$_H$

$q_i$ verringern          $q_i$ (neu) ≅ qi (alt)          $q_i$ vergrößern

Fig. 3

$$q_i \longrightarrow \min\left\{\max\left\{q_i + \frac{0.25}{threshold_H - threshold_N}\left(Y_i - threshold_N\right) - 0.1,\ 0.1\right\},\ 1.0\right\}$$